# EUROPEAN PATENT APPLICATION

(11) **EP 2 042 854 A2**
(43) Date of publication of application: **01.04.2009**
(21) Application number: 08165328.9
(22) Date of filing: 29.09.2008
(51) Int. Cl.: G01N 21/21, G01N 21/35

(54) **Near infrared sensor system with nano-imprinted wire-grid polarizers and method using the same**

(30) Priority: 28.09.2007 US 863970
(71) Applicant: Rockwell Automation Technologies, Inc., Mayfield Heights, OH 44124 (US)
(72) Inventor: Leard, Francis Lawrence, Sudbury, MA (US); Dogul, James Edward, Hudson, NH (US)
(74) Representative: Grünecker, Kinkeldey, Stockmair & Schwanhäusser Anwaltssozietät

(57) **Abstract**

A near-infrared (NIR) sensor system and methods for detecting changes in polarization. The sensor system includes a transmit optical element to transmit optical signals with a polarization, and a receive optical element to receive optical signals with an orthogonal polarization. The transmit and receive optical elements may include nano-imprinted wire-grid polarizers configured to polarize at least infrared IR wavelengths. In some example embodiments, birefringent filter layers may be used to induce an additional polarization state on the transmitted and received optical signals.

## Description

### TECHNICAL FIELD

Some example embodiments pertain to sensor systems. Some example embodiments pertain to sensor systems that use Near Infrared (NIR) optical signals. Some example embodiments pertain to safety products and safety sensors. Some example embodiments pertain to safety curtains.

### BACKGROUND

Many conventional sensor systems that rely on visible wavelengths of light use infrared (IR) filters to remove noise introduced by unwanted IR components in visible light sources. One issue with these sensor systems that their sensitivity is reduced by these filters. Another issue with some conventional sensor systems that rely on visible wavelengths is that they may be distracting to persons causing possible safety concerns.

Thus, there are general needs for sensor systems and methods for sensing with increased sensitivity. There are also general needs for sensor systems and methods that are less distracting. There are also general needs for sensor systems and methods with increased range and/or reduced power consumption.

### BRIEF DESCRIPTION OF THE DRAWINGS

FIG. 1 is a block diagram of a sensor system in accordance with some example embodiments of the present invention;

FIG. 2A illustrates transmit and receive optical elements that include a nano-imprinted wire-grid polarizer in accordance with some example embodiments of the present invention;

FIG. 2B illustrates transmit and receive optical elements that include a nano-imprinted wire-grid polarizer and a birefringent filter layer in accordance with some example embodiments of the present invention;

FIG. 2C illustrates pairs of transmit and receive optical elements that include birefringent filter layers that introduce different polarization states in accordance with some example embodiments of the present invention;

FIG. 3A illustrates a side view of a nano-imprinted wire-grid polarizer in accordance with some example embodiments of the present invention;

FIG. 3B illustrates a finger of the nano-imprinted wire-grid polarizer of FIG. 3 A in accordance with some example embodiments of the present invention;

FIG. 4 illustrates fabrication of a nano-imprinted wire-grid polarizer in accordance with some example embodiments of the present invention; and

FIG. 5 is a functional diagram of a safety curtain system in accordance with some example embodiments of the present invention.

### DETAILED DESCRIPTION

The following description and the drawings sufficiently illustrate specific example embodiments of the invention to enable those skilled in the art to practice them. Other example embodiments may incorporate structural, logical, electrical, process, and other changes. Examples merely typify possible variations. Individual components and functions are optional unless explicitly required, and the sequence of operations may vary. Portions and features of some example embodiments may be included in, or substituted for those of other example embodiments. Example embodiments of the invention set forth in the claims encompass all available equivalents of those claims. Example embodiments of the invention may be referred to herein, individually or collectively, by the term "invention" merely for convenience and without intending to limit the scope of this application to any single invention or inventive concept if more than one is in fact disclosed.

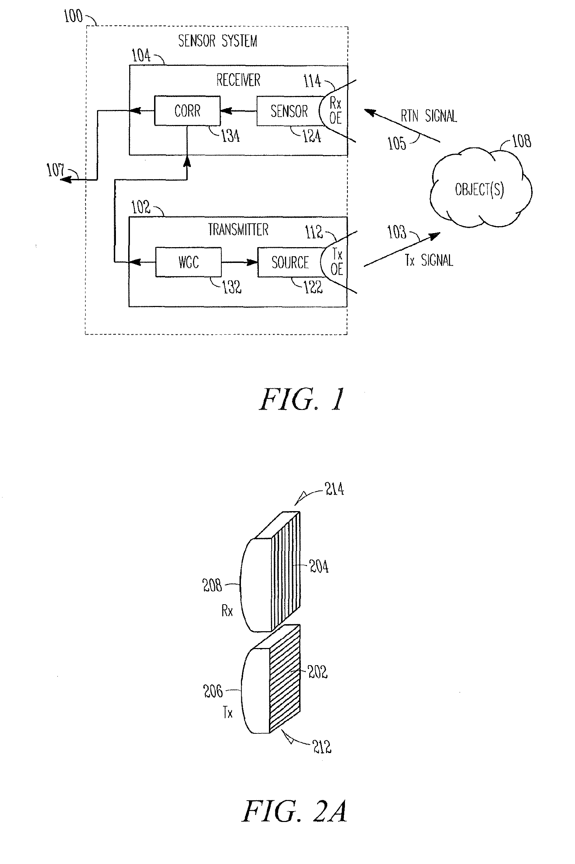

FIG. 1 is a block diagram of a sensor system in accordance with some example embodiments of the present invention. Sensor system 100 may, among other things, detect changes in polarization using infrared (IR) light, including Near IR (NIR) light. In some example embodiments, sensor system 100 may also detect changes in polarization using both IR and visible light. Sensor system 100 may comprise transmitter 102 and receiver 104. Transmitter 102 may include transmit optical element (TxOE) 112 configured to transmit optical signals 103 with a first polarization, and receiver 104 may include receive optical element (RxOE) 114 configured to receive return (RTN) optical signals 105 with a second polarization. The second polarization may be substantially orthogonal to the first polarization. Transmitter 102 may include optical source 122 configured to generate wavelengths for transmission, and receiver 104 may include optical sensor 124 to sense received wavelengths.

Sensor system 100 may be used to detect a change in polarization of the IR light present in return signals 105 caused by object 108. In this way, a change in state of the transmitted signals may be detected. As discussed in more detail below, transmit and receive optical elements 112 and 114 may include nano-imprinted wire-grid polarizers configured to polarize at least some infrared IR wavelengths. The use of nano-imprinted wire-grid polarizers, as compared to conventional dye-based polarizers and conventional wire-grid polarizers, allows a band of wavelengths to be polarized with a high-extinction ratio (e.g., 15 - 30 dB). Nano-imprinted wire-grid polarizers may also provide for an increased angle tolerance particularly when index-matching layers are used.

In some example embodiments, transmit and receive optical elements 112 and 114 may also include one or more birefringent filter layers to induce an additional polarization state on transmitted and received signals. These example embodiments are also discussed in more detail below.

In some example embodiments, optical source 122 may have one or more diodes to generate both visible and the IR wavelengths. Optical sensor 124 may be an optical or IR detector and may provide a digital or analog signal upon detection of the IR wavelengths.

In some example embodiments, transmitter 102 may also include waveform generating circuitry (WGC) 132 configured to impose a temporal signature on optical signals generated by optical source 122. Receiver 104 may also include correlation circuitry (CORR) 134 configured to correlate the temporal signature present within return signals 105 with the signature of transmit signals 103. In these example embodiments, the temporal signature may comprise a time-varying waveform, such as pulses having a predetermined pulse repetition rate or other temporal signature. Correlation circuitry 134 may provide output signal 107 which may provide a notification over a network, turn on an indicator such as an LED, etc. In other example embodiments that do not use temporal signatures or correlation circuitry 134, sensor 124 may provide output signal 107.

As used herein, the term 'optical' may comprise visible, IR, NIR and/or ultraviolet (UV) wavelengths. In some example embodiments, sensor system 100 may be a safety sensor. Object 108 may comprise a reflector which may be configured to return signals with about the same polarization state as the transmitted signals. Sensor system 100 may also be used as part of a process station to count parts moving on a conveyor belt. Sensor system 100 may also be part of a P-retro proximity sensor or a photo-switch sensor. Sensor system 100 may be part of a safety sensor or may be used in a safety application that uses polarized light for target discrimination.

Although sensor system 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radiofrequency integrated circuits (RFICs) and combinations of various hardware and logic circuitry for performing at least the functions described herein. In some example embodiments, the functional elements of sensor system 100 may refer to one or more processes operating on one or more processing elements.

FIG. 2A illustrates transmit and receive optical elements that include a nano-imprinted wire-grid polarizer in accordance with some example embodiments of the present invention. Transmit optical element 212 may be suitable for use as transmit optical element 112 (FIG. 1), and receive optical element 214 may be suitable for use as receive optical element 114 (FIG. 1), although other configurations may also be suitable. Transmit optical element 212 may include lens 206 and nano-imprinted wire-grid polarizer 202. Receive optical element 214 may include lens 208 and nano-imprinted wire-grid polarizer 204. Nano-imprinted wire-grid polarizers 202 and 204 may have substantially orthogonal polarizations, or may be positionable to provide substantially orthogonal polarizations. As illustrated in FIG. 2A, nano-imprinted wire-grid polarizer 202 have a horizontal polarization, and nano-imprinted wire-grid polarizer 204 may have a vertical polarization, although the scope of the invention is not limited in this respect.

In some example embodiments, the polarizations introduced by nano-imprinted wire-grid polarizer 202 and 204 may comprise either linear polarizations or circular polarizations, although any type of orthogonal elliptical polarizations may be used. For example, when linear polarizations are used, one polarization may be a horizontal polarization and the other polarization may be a vertical polarization, although polarizations at other orthogonal angles (e.g. 45 degrees and 135 degrees) are also suitable. When circular polarizations are used, one polarization may be a right-hand circular polarization, and the other polarization may be a left-hand circular polarization.

In some example embodiments, lens 206 may focus and/or collimate at least the IR wavelengths generated by optical source 122 (FIG. 1) prior to the transmission of the polarized wavelengths by wire-grid polarizer 204 of transmit optical element 212. Lens 208 to help direct and/or focus at least the polarized IR wavelengths on optical sensor 124 (FIG. 1) that are provided by wire-grid polarizer 204 of receive optical element 214.

In some example embodiments, diodes of optical source 122 (FIG. 1) may generate both IR wavelengths and visible wavelengths. The use of both visible and the IR wavelengths may provide sensor system 100 (FIG. 1) with increased range and reduced sensitivity to noise. In some other example embodiments, diodes of optical source 122 (FIG. 1) may generate substantially IR wavelengths with little or no visible wavelengths, although this is not a requirement.

In some example embodiments, index matching layers may be provided over wire-grid polarizers 202 and 204 for increased angle tolerance of transmit and receive signals 103 and 105 (FIG. 1).

In some conventional systems that use visible wavelengths, an IR filter is generally used to remove noise introduced by unwanted IR components of visible light sources. The use of these filters in conventional systems results in reduced sensitivity due to a reduction in visible light transmitted and/or received. As an alternative, other conventional sensor systems use optical diodes that generate little or no IR wavelengths, however these optical diodes are more expensive. Unlike conventional sensor systems that rely on visible wavelengths, example embodiments of the present invention do not require an IR filter to remove unwanted IR wavelengths or the use of expensive optical diodes that generate only IR wavelengths.

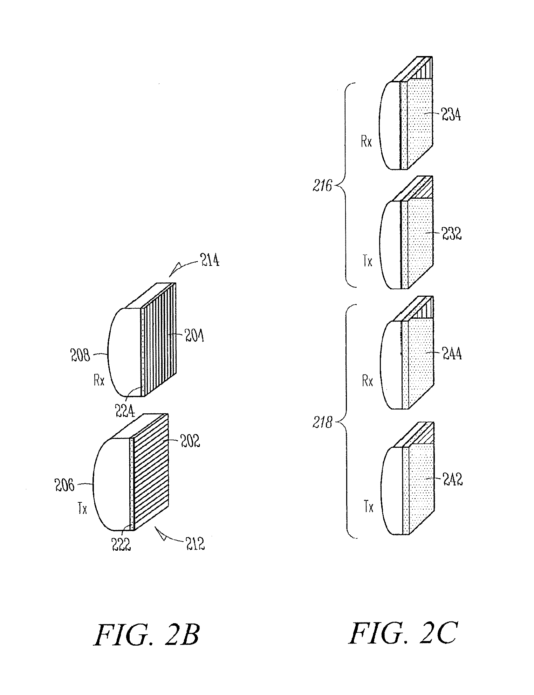

FIG. 2B illustrates transmit and receive optical elements that include a nano-imprinted wire-grid polarizer and a birefringent filter layer in accordance with some example embodiments of the present invention. In these example embodiments, transmit optical element 212 may include, in addition to nano-imprinted wire-grid polarizer 202, birefringent filter layer 222 to induce an additional polarization state on transmit optical signals 103 (FIG. 1). Receive optical element 214 may include, in addition to nano-imprinted wire-grid polarizer 204, birefringent filter layer 224 to induce a corresponding additional polarization state on receive optical signals 105 (FIG. 1). The additional polarization state may provide a predetermined amount of phase retardation and/or a predetermined phase delay to the orthogonal polarization introduced by the nano-imprinted wire-grid polarizers 202 and 204.

As illustrated in FIG. 2B, birefringent filter layers 222 and 224 may be provided between lenses 206 and 208 and nano-imprinted wire-grid polarizers 202 and 204 (i.e., nano-imprinted wire-grid polarizers 202 and 204 are shown the outer side), however this is not a requirement. In some example embodiments, birefringent filter layer 222 may be provided after nano-imprinted wire-grid polarizer 202 of transmit optical element 212 so that the IR wavelengths are first polarized by nano-imprinted wire-grid polarizer 202 prior to having an additional polarization state induced by birefringent filter layer 222. In these example embodiments, birefringent filter layer 224 may be provided in the receive signal path after nano-imprinted wire-grid polarizer 204 of receive optical element 214 so that the IR wavelengths of receive optical signals 105 (FIG. 1) are polarized by nano-imprinted wire-grid polarizer 204 after having an additional polarization state induced by birefringent filter layer 224.

The additional polarization state provided across selected bands of wavelengths allows system 100 to use non-interfering channels through polarization diversity. The use of birefringent filter layers 222 and 224 to provide polarization diverse signals allows sensor system 100 (FIG. 1) to use several transmit and receive elements without interfering with one another. Through polarization diversity, several sensor systems may also operate without interference with each other. Birefringent filter layers 222 and 224 of these example embodiments are described in more detail below.

FIG. 2C illustrates pairs of transmit and receive optical elements that include birefringent filter layers that introduce different polarization states in accordance with some example embodiments of the present invention. First pair 216 of transmit and receive optical elements may comprise birefringent filter layers 242 and 244, and second pair 218 of transmit and receive optical elements may comprise birefringent filter layers 232 and 234. Birefringent filter layers 242 and 244 may introduce a polarization state or an amount of phase retardation which differs from the polarization state or the amount of phase retardation introduced by birefringent filter layers 232 and 234. The difference in polarization states or amount of phase retardation may be selected so that first pair 216 of transmit and receive optical elements may transmit and receive IR signals of substantially the same wavelengths as that are used by second pair 218 of transmit and receive optical elements.

In these example embodiments, sensor system 100 (FIG. 1) may be a multi-sensor system comprising two or more transmit optical elements 112 (FIG. 1) and two or more receive optical elements 114 (FIG. 1). Each of the two or more transmit and receive optical elements may include at least one birefringent filter layer. In these example embodiments, the one or more birefringent filter layers may induce a polarization state selected to allow pairs of transmit and receive optical elements to be used without interference with other pairs of transmit and receive optical elements.

In some example embodiments, the birefringent filter layers of one pair of transmit and receive optical elements may introduce an odd number of wavelengths of retardation while the birefringent filter layers of another pair of transmit and receive optical elements may introduce a different odd number of wavelengths of retardation. In these example embodiments, a different polarized ellipsicity introduced by the birefringent filter layers provides for polarization diversity. In some example embodiments up to ten or more pairs of transmit and receive optical elements may be used together without interference.

In some example embodiments, to achieve differing and/or non-interfering polarization states, one or more birefringent filter layers may be used. Each birefringent filter layer may introduce a predetermined amount of phase retardation.

In the example embodiments illustrated in FIG. 2C, nano-imprinted wire-grid polarizers, such as nano-imprinted wire-grid polarizers 202 and 204, may be provided in each of the transmit and receive optical elements in addition to the one or more birefringent filter layers.

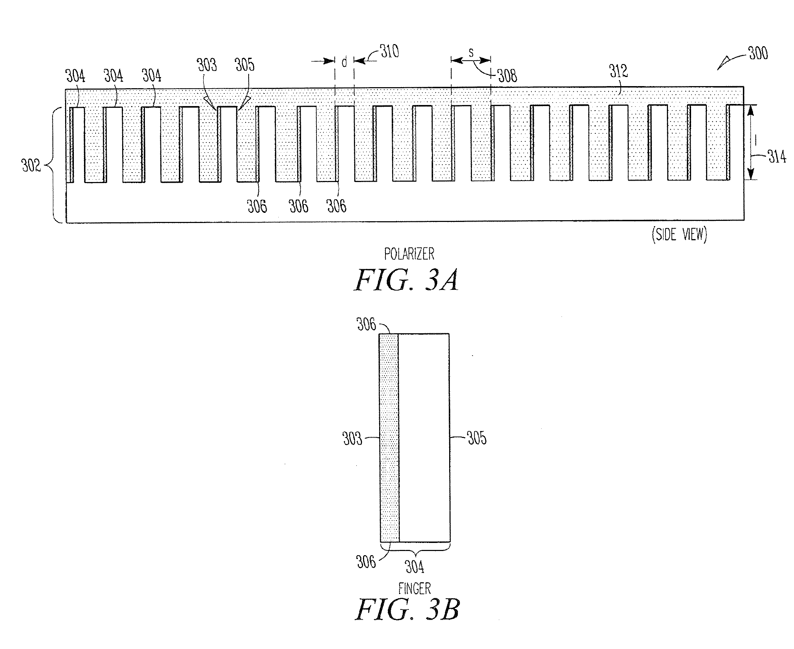

FIG. 3A illustrates a side view of a nano-imprinted wire-grid polarizer in accordance with some example embodiments of the present invention. Nano-imprinted wire-grid polarizer 300 may be suitable for use as nano-imprinted wire-grid polarizer 202 (FIGs. 2A and 2B) and/or nano-imprinted wire-grid polarizer 204 (FIGs. 2A and 2B), although other configurations may also be suitable. Nano-imprinted wire-grid polarizer 300 may comprise substrate 302 having a plurality of fingers 304 provided in an elongated comb-like configuration. Fingers 304 may comprise metal 306 deposited on one side 303 of each of fingers 304 and may be devoid of the metal on opposite side 305 of each of fingers 304. An example of a finger is illustrated in FIG. 3B.

In accordance with some example embodiments, fingers 304 may have spacing (s) 308 (e.g., a periodicity) therebetween selected to be less than a quarter-wavelength of a stop band for predetermined IR wavelengths that nano-imprinted wire-grid polarizer 300 is configured to polarize. Fingers 304 may also have thickness (d) 310 of approximately less than or equal to approximately one-tenth of a wavelength of the IR wavelengths that nano-imprinted wire-grid polarizer 300 is configured to polarize. Fingers may also have a depth (1) 314 selected based on the IR wavelengths to pass.

In some example embodiments, fingers 304 may be overcoated with and/or encapsulated within encapsulant 312. Encapsulant 312 may be transparent for both IR and visible wavelengths, however encapsulant 312 may be selected to be transparent for all wavelengths emitted by source 122 (FIG. 1). In some example embodiments, encapsulant 312 may be selected to absorb particular wavelengths to tailor the spectral emissions of source 122 (FIG. 1) and to aid in the recovery of the wavelengths in the sensed environment, although the scope of the invention is not limited in this respect.

In some example embodiments (e.g., when substrate 302 is an acrylic), a thin layer of a UV epoxy encapsulant or a thin layer of polymethylmethacrylate (PMMA) may be used for encapsulant 312 to overcoat fingers 304.

In some example embodiments, nano-imprinted wire-grid polarizers 202 and 204 (FIGs. 2A and 2B) may be configured to polarize IR wavelengths in the nanometer range, including NIR wavelengths, ranging from 808 nanometers or less to up to 940 nanometers and greater. The 'wire' of nano-imprinted wire-grid polarizers 202 and 204 (FIGs. 2A and 2B) may refer to metal 306 disposed on fingers 304.

In some example embodiments, when ultraviolet (UV) light is to be polarized, wire-grid polarizers 202 and 204 (FIGs. 2A and 2B) may be configured to polarize wavelengths of between approximately 200 to 400 nanometers. When visible light it to be polarized, wire-grid polarizers 202 and 204 (FIGs. 2A and 2B) may be configured to polarize wavelengths of between approximately 400 to 750 nanometers. When NIR and IR light are to be polarized, wire-grid polarizers 202 and 204 (FIGs. 2A and 2B) may be configured to polarize wavelengths of between approximately 750 to 3000 nanometers.

In some example embodiments, spacing 308, which determines the periodicity of the structure, may be set to be at or below a stop band (e.g., prior to a peak polarization wavelength). Spacing 308 may be selected to be slightly less than a quarter wavelength of a selected IR wavelength, but preferably is not equal to a quarter-wavelength to avoid resonance. In these example embodiments, the structure of nano-imprinted wire-grid polarizers 202 and 204 (FIGs. 2A and 2B) may be non-resonant. For periodicity, spacing 308 may be selected to range from one-third to two-thirds of the wavelengths of interest. Depth (1) 314, for example, may be selected to range from one to ten times the wavelengths of interest and may also depend on the extinction ratio and the operational angle of wire-grid polarizers 202 and 204 (FIGs. 2A and 2B).

In some example embodiments, metal 306 may be selected to have at least some loss at IR wavelengths so as to absorb some IR energy. Metal 306 may also be selected to have good conductivity and may comprise nickel, titanium, aluminum, gold or silver, or a combination thereof, although the scope of the invention is not limited in this respect.

In some example embodiments, each of birefringent filter layers 222 and 224 (FIG. 2B) may also comprise a substrate, similar to substrate 302 having plurality of fingers, similar to fingers 304, however both sides of the fingers are devoid of metal. The fingers may have a spacing (e.g., a periodicity) therebetween selected to be less than a quarter wavelength of a stop band for predetermined IR wavelengths, and may have a thickness of approximately less than or equal to approximately one-tenth of a wavelength the predetermined IR wavelengths.

For each of birefringent filter layers 222 and 224 (FIG. 2B), the fingers may be overcoated with and/or encapsulated within an encapsulant, such as encapsulant 312. In some example embodiments, the encapsulant may be selected to have a coefficient of thermal expansion (CTE) compatible with that of the substrate. In these example embodiments, birefringent filter layers 222 and 224 (FIG. 2B) may be fabricated without the application of metal features to the grating, and the valleys between the mesas may be filled with a material having different refractive index that is selected to have a CTE compatible with substrate. The amount of birefringence may be dependent on thickness of the fingers (e.g., the width of the mesas) and the depth. Other factors that would be used to select the amount of birefringence include the sidewall structure of the mesas and the squareness or shape of the peaks and valleys of the grating. In these example embodiments when the encapsulant is selected to be thermally compatible with the substrate and since other parameters may be controlled by design or process, then a birefringent plate suitable for use as birefringent filter layers 222 and 224 (FIG. 2B) may be less dependent on temperature and athermalized (i.e., designed not to vary substantially with temperature). This is unlike some conventional quarter wavelength film or dye based polarizers in which the amount of birefringence varies significantly with temperature.

In some alternate example embodiments, birefringent filter layers 222 and 224 (FIG. 2B), and birefringent filter layers 232, 234, 242 and 244 (FIG. 2C) may comprise thin-film circular polarizers, although the scope of the invention is not limited in this respect.

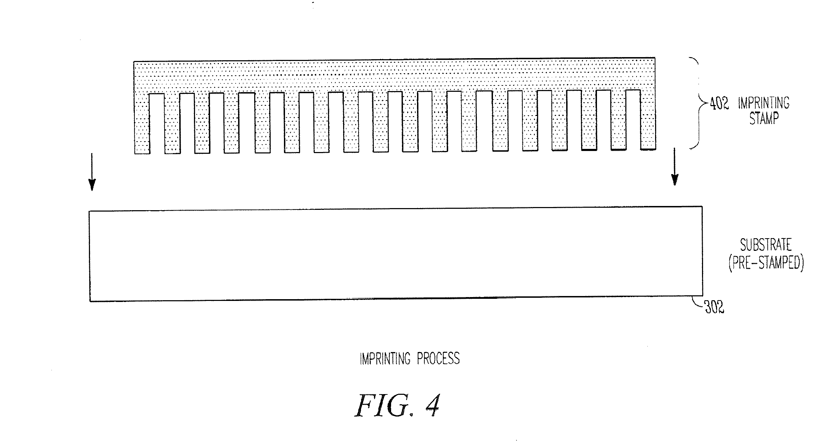

FIG. 4 illustrates fabrication of a nano-imprinted wire-grid polarizer in accordance with some example embodiments of the present invention. In these example embodiments, nano-imprinted wire-grid polarizer 300 (FIG. 3A) may be manufactured by stamping substrate 302 with imprinting stamp 402 while substrate 302 is at or near a near transition temperature (e.g., while soft). Imprinting stamp 402 may comprise a processed silicon material, and substrate 302 may comprise a plastic, glass or acrylic substrate, although the scope of the invention is not limited in this respect. The materials used for substrate 302 and imprinting stamp 402 may be selected to have different CTEs.

In these example embodiments, after imprinting stamp 402 is pressed into substrate 302 while substrate 302 is t or near a near transition temperature, substrate 302 and stamp 402 may be allowed to cool. Because substrate 302 and stamp 402 may cool at different rates, stamp 402 may shrink in size allowing it to be removed from substrate 302 after substrate 302 has at least partially cooled and at least partially hardened. After hardening, metal 306 (FIG. 3A and 3B) may be deposited by metal deposition and ion-assisted etching processes, such as those used in the fabrication of three-dimensional electronic circuits, although the scope of the invention is not limited in this respect.

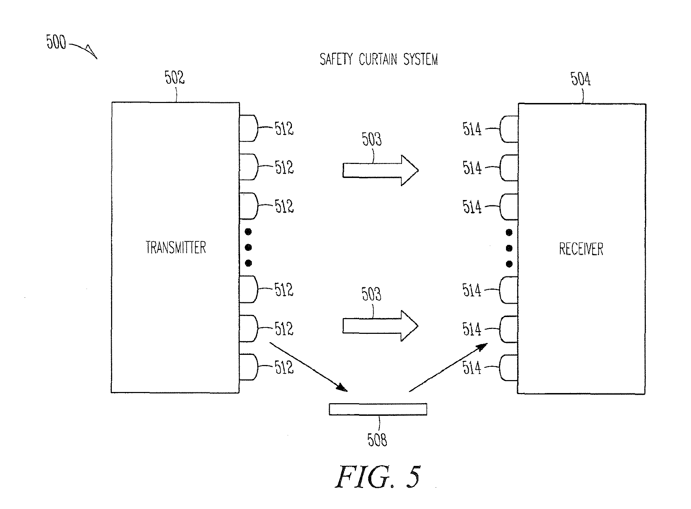

FIG. 5 is a functional diagram of a safety curtain system in accordance with some example embodiments of the present invention. Safety curtain system 500 includes transmitter 502 which may have one or more nano-imprinted wire-grid polarizers to transmit circularly polarized IR wavelengths 503. Safety curtain system 500 also includes receiver 504 which may have one or more nano-imprinted wire-grid polarizers to receive the circularly polarized IR wavelengths 503 transmitted by transmitter 502. The one or more nano-imprinted wire-grid polarizers of receiver 504 may reject IR wavelengths of an opposite circular polarization caused by reflective objects.

Accordingly, safety curtain system 500 may detect objects present between the transmitter 502 and receiver 504, while false positives caused by wavelengths reflecting off reflective objects within the operational angles of system 500, such as reflective object 508, may be significantly reduced or eliminated. For example, when transmitter 502 transmits right-hand circularly polarized wavelengths, the wavelengths reflected by reflecting object 508 may be left-hand circularly polarized and will be rejected by the right-hand circular polarization of the nano-imprinted wire-grid polarizers of receiver 504. Accordingly, safety curtain system 500 is less likely to generate a false positive that may result from nearby reflective objects, such as a person wearing a shiny object (e.g., a badge, piece of metal, plastic sheet, etc.) walking outside or near the curtain, but not through it. Furthermore, safety curtain system 500 is less likely to generate a false positive that may result from a reflective stationary object or other reflective structure that exists near the curtain.

In some example embodiments, transmitter 502 may comprise a plurality of transmit optical elements 512. Each transmit optical element 512 may have a nano-imprinted wire-grid polarizer to transmit circularly polarized IR wavelengths 503. The nano-imprinted wire-grid polarizers of each transmit optical element 502 may significantly reduce and/or almost eliminate the transmission of oppositely polarized IR wavelengths. Receiver 504 may comprises a plurality of receive optical elements 514. Each receive optical element 514 may having a nano-imprinted wire-grid polarizer configured to receive the circularly polarized IR wavelengths that are transmitted by transmitter 502. The nano-imprinted wire-grid polarizers of receive optical elements 514 may reject oppositely circularly polarized IR wavelengths (e.g., that may be caused by reflective object 508).

In some example embodiments, nano-imprinted wire-grid polarizers used by transmit and receive optical elements 512 and 514 may be similar to nano-imprinted wire-grid polarizer 300 (FIG. 3). The dimensions of nano-imprinted wire-grid polarizer 300 (FIG. 3) for use in system 500 may be selected to provide either right-hand circular polarization for predetermined IR wavelengths or left-hand circular polarization for predetermined IR wavelengths.

In some example embodiments, when the nano-imprinted wire-grid polarizers of transmitter 502 are configured to transmit right-hand circularly polarized IR wavelengths, the nano-imprinted wire-grid polarizers of receiver 504 would be configured to receive right-hand circularly polarized IR wavelengths and would be configured to reject left-hand (i.e., oppositely) circularly polarized IR wavelengths. When the nano-imprinted wire-grid polarizers of transmitter 502 are configured to transmit left-hand circularly polarized IR wavelengths, the nano-imprinted wire-grid polarizers of receiver 504 would be configured to receive left-hand circularly polarized IR wavelengths and would be configured to reject right-hand circularly polarized IR wavelengths.

In some example embodiments, each of transmit optical elements 512 may be similar to transmit optical element 112 (FIG. 1), and each of receive optical elements 514 may be similar to receive optical element 114 (FIG. 1). Safety curtain system 500 may also include other circuitry to detect and identify objects present within the curtain and provide notification as discussed in regard to sensor system 100 (FIG. 1). In some example embodiments, transmit and receive optical elements 512 and 514 may also include one or more birefringent filter layer, such as birefringent layers 222 and 224 (FIG. 2B), although the scope of the invention is not limited in this respect.

Unless specifically stated otherwise, terms such as processing, computing, calculating, determining, displaying, or the like, may refer to an action and/or process of one or more processing or computing systems or similar devices that may manipulate and transform data represented as physical (e.g., electronic) quantities within a processing system's registers and memory into other data similarly represented as physical quantities within the processing system's registers or memories, or other such information storage, transmission or display devices. Furthermore, as used herein, a computing device includes one or more processing elements coupled with computer-readable memory that may be volatile or nonvolatile memory or a combination thereof.

Some example embodiments of sensor system 100 (FIG. 1) and safety curtain system 500 may be implemented in one or a combination of hardware, firmware and software. Some example embodiments of sensor system 100 (FIG. 1) and safety curtain system 500 may also be implemented as instructions stored on a machine-readable medium, which may be read and executed by at least one processor to perform the operations described herein. A machine-readable medium may include any mechanism for storing or transmitting information in a form readable by a machine (e.g., a computer). For example, a machine-readable medium may include read-only memory (ROM), random-access memory (RAM), magnetic disk storage media, optical storage media, flash-memory devices, and others.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An infrared (IR) sensor system comprising:
a transmit optical element to transmit optical signals comprising IR wavelengths with a first polarization;
a receive optical element to receive optical signals comprising IR wavelengths with a second polarization, the second polarization being substantially orthogonal to the first polarization,
wherein the transmit and receive optical elements include nano-imprinted wire-grid polarizers configured to polarize at least some of the IR wavelengths.

2. The system of claim 1 wherein the nano-imprinted wire-grid polarizers comprise a substrate having a plurality of fingers, and
wherein the fingers comprise metal deposited on one side of each of the fingers and are devoid of the metal on an opposite side of each of the fingers.

3. The system of claim 1 further comprising an optical source having one or more diodes to generate visible and the IR wavelengths,
wherein the transmit optical element further comprises a transmit lens to collimate at least the IR wavelengths generated by the optical source prior to transmission of IR wavelengths having the first polarization by the wire-grid polarizer of the transmit optical element.

4. The system of claim 1 wherein the first and second polarizations comprise either linear polarizations or circular polarizations.

5. The system of claim 1 wherein the transmit and receive optical elements each further comprise a birefringent filter layer to induce an additional polarization state on the transmit and receive optical signals,
wherein each of the birefringent filter layer comprise a substrate having a plurality of fingers, wherein sides of the fingers are devoid of metal.

6. A method to detect changes in polarization comprising:
transmitting optical signals comprising IR wavelengths through a first nano-imprinted wire-grid polarizer with a first polarization; and
receiving optical signals comprising the IR wavelengths through a second nano-imprinted wire-grid polarizer with a second polarization, the second polarization being substantially orthogonal to the first polarization,
wherein the nano-imprinted wire-grid polarizers are configured to polarize at least the IR wavelengths.

7. The method of claim 6 wherein the nano-imprinted wire-grid polarizers comprise a substrate having a plurality of fingers, and
wherein the fingers comprise metal deposited on one side of each of the fingers and are devoid of the metal on an opposite side of each of the fingers.

8. The method of claim 6 further comprising:
generating visible and the IR wavelengths with an optical source having one or more diodes;
collimating, with a transmit lens, at least the IR wavelengths generated by the optical source prior to transmission of IR wavelengths having the first polarization;
directing, with a receive lens, at least the IR wavelengths having the second polarization onto an optical sensor;
imposing a temporal signature on optical signals generated by the optical source; and
correlating the temporal signature present within return signals.

9. The method of claim 6 further comprising inducing an additional polarization state on the transmitted and received optical signals with one or more birefringent filter layers, wherein each of the birefringent filter layers comprise a substrate having a plurality of fingers, wherein sides of the fingers are devoid of metal.

10. A safety curtain system comprising:
a transmitter having one or more nano-imprinted wire-grid polarizers to transmit circularly polarized infrared (IR) wavelengths; and
a receiver having one or more nano-imprinted wire-grid polarizers to receive the circularly polarized IR wavelengths transmitted by the transmitter and to reject IR wavelengths of an opposite circular polarization caused by reflective objects,
wherein the transmitter comprises a plurality of transmit optical elements, each transmit optical element having a nano-imprinted wire-grid polarizer to transmit the circularly polarized IR wavelengths and refrain from transmitting oppositely polarized IR wavelengths, and
wherein the receiver comprises a plurality of receive optical elements, each receive optical element having a nano-imprinted wire-grid polarizer to receive the circularly polarized IR wavelengths and to reject oppositely circularly polarized IR wavelengths.
